# EUROPEAN PATENT SPECIFICATION

(11) **EP 4 108 689 B1**
(45) Date of publication and mention of the grant of the patent: **29.04.2026**
(21) Application number: 20925959.7
(22) Date of filing: 15.09.2020
(51) Int. Cl.: C08C 1/04, C08C 1/08

(54) **PROCESSING METHOD FOR CREAMING NATURAL LATEX**
VERARBEITUNGSVERFAHREN ZUR WEISSMACHUNG VON NATÜRLICHEM LATEX
PROCÉDÉ DE TRAITEMENT POUR CRÉMER UN LATEX NATUREL

(30) Priority: 18.03.2020 CN 202010193100
(43) Date of publication of application: 28.12.2022
(73) Proprietor: Tian, Xiaohui, Shanghai 200050 (CN)
(72) Inventor: TIAN, Xiaohui, Shanghai 200030 (CN); WANG, Dongqi, Shanghai 200030 (CN)
(74) Representative: Swea IP Law AB
(86) International application number: PCT/CN2020/115191
(87) International publication number: WO 2021/184703

(56) References cited:
- CN-A- 1 321 691
- CN-A- 103 923 232
- CN-A- 105 017 446
- GB-A- 660 743
- GB-A- 661 511
- JP-A- 2010 144 001
- JP-A- H11 106 405
- US-A- 5 998 512
- US-A- 6 025 451

## Description

### TECHNICAL FIELD

The present invention relates to a production method of natural rubber latex, and in particular to a processing method of natural rubber latex by creaming. More specifically, the present invention relates to a non-centrifugal processing method by creaming, by which natural rubber latex with high rubber purity and more dense rubber particle size distribution is separated and produced from a natural rubber latex slurry obtained from different environments at different time. The present invention belongs to the technical field of rubber processing.

### BACKGROUND ART

Natural rubber latex exists in the form of colloid, in which rubber particles are suspended in an aqueous slurry containing many non-rubber components (including phospholipids, proteins, carbohydrates, and inorganic salts). It is observed by an electron microscope that rubber particles of rubber trees are spherical or pear-shaped, and biosynthesis of rubber occurs on the surface of rubber particles. Rubber particles are formed by polyisoprene chains. The polyisoprene chains include hydrophobic parts and hydrophilic ends, the hydrophobic parts being closely arranged to form an internal spherical structure, and the hydrophilic ends being exposed on the surface of the spherical structure. Microscopically, rubber particles include an ω-terminal-modified isoprene unit, wherein the ω-terminal is successively linked to two *trans*-1,4-isoprene units and a long chain formed by polymerization of many cis-1,4-polyisoprene units, and the long chain is then covalently linked to a monophosphate or diphosphate group called α-terminal. The ω-terminal usually binds to biosynthetic proteins, while the α-terminal is covalently linked to phospholipids. When rubber is in an anhydrous state, these binding sites can be regarded as branching points, and the ω-terminal of a rubber chain is linked to proteins and the α-terminal is linked to phospholipids. Existing studies have shown that these naturally-occurring branching points are crucial for the excellent properties of natural rubber. Although technologies in the synthetic rubber industry are improving constantly, replication of natural rubber cannot be industrially synthesized due to the existence of the branching point network in natural rubber. Therefore, many rubber products, such as tires, auto parts, condoms, and surgical gloves, are of a great demand for natural rubber.

More importantly, the rubber particles produced by a rubber tree usually have particle sizes exhibiting a bimodal distribution, including large rubber particles and small rubber particles, among them, rubber particles with a particle size of 10 nm to 250 nm are regarded as the small rubber particles, and rubber particles with a particle size of 250 nm to 3 µm are regarded as the large rubber particles. In addition to the differences in size, the small rubber particles have higher biosynthetic activity than the large rubber particles. The surface of rubber particles is wrapped by a single layer of biofilm, which is composed of various proteins, phospholipids and other compounds. The differences between the large rubber particles and the small rubber particles lie not only in molecular weight, but also in the structure of rubber chain and surface protein. A branching point of the molecular chain of the large rubber particles derives from the aggregation of phospholipids linked to the α-terminal of the chain, which becomes a phospholipid branching point. While the small rubber particles have a different structure. The α-terminal of the molecular chain of the small rubber particles only binds to monophosphate or diphosphate groups, but rarely binds to or does not bind to phospholipids that are easy to aggregate. This exposed site becomes an active chain terminal, which allows high biosynthetic activity. Moreover, the other terminal of the molecular chain of the small rubber particles, namely, the ω-terminal, is linked to proteins, thus becoming a protein branching point. Studies have shown that the small rubber particles are mainly composed of two independent groups of linear chain molecules that have a high molecular weight and a low molecular weight, respectively, and these molecules have active chain terminals, achieving chain extension. The large rubber particles are mainly composed of branched chain molecules, and branching points are formed by aggregation of low-molecular-weight rubber chains through phospholipids inside or on the surface of the rubber particles. The formation of branching points enables that the molecular weight of the large rubber particles increases with the increase of particle size. Therefore, the small ruber particles and the large rubber particles have different branching point structures and molecular weights, which means that the particle size of rubber particles is an important factor affecting the characteristics and performance of natural rubber. For example, the α-terminal of the molecular chain of the large rubber particles is linked to a phospholipid group that is easy to aggregate, serving as a natural branching network, and the large rubber particles exhibit superior tensile strength and elasticity before vulcanization. While the small rubber particles exhibit better performance after vulcanization, and the protein linked to the ω-terminal of the molecular chain of the small rubber particles plays a role in accelerating cross-linking during a vulcanization process. At present, the commercially-available natural rubber is a mixture of a component with a low molecular weight of 100,000 to 200,000 and a component with a high molecular weight of 1,000,000 to 2,500,000. Compared with synthetic rubber, natural rubber has better raw rubber properties and processing properties, and thus is often used in large tires. Rubber used for manufacturing tire tread has a weight-average molecular weight (M_{W}) of preferably at least 1,400,000, because the strength of raw rubber will decrease at a M_{W} lower than 1,400,000. In addition, in natural rubber, the presence of non-rubber components such as proteins will cause entanglement of molecular chains, thereby causing gelation, which will make the rubber viscosity rise sharply and greatly deteriorate the processability.

It is known that the large rubber particles and the small rubber particles in natural rubber latex are separated by a stepwise differential centrifugation method (see patent: CN 102321197). This method is difficult to be industrialized due to cumbersome processes and high requirements on equipment. The structure of rubber particles will inevitably be damaged after repeated centrifugal operations. In addition, methods for reducing the content of non-rubber components in natural rubber latex include: 1) centrifuging highly-diluted rubber latex and separating concentrated rubber latex; and 2) dialyzing rubber latex through a semipermeable membrane.

US6025451A discloses a method of producing a particulate natural rubber, which comprises adding an inorganic salt to a serum obtained by centrifugal separation of a natural rubber latex in the amount enough to cause separation of a particulate natural rubber component in the serum, thereby to isolate the particulate natural rubber component as a cream component.

US5998512A discloses a process for reducing the amount of lipids within natural rubber latices comprising the steps of obtaining a natural rubber latex from a guayule bush, the latex having a dry natural rubber content of from about 10 to about 40 percent by weight, adding from about 0.1 to about 25 parts by weight of a surfactant per one hundred parts by weight of dry natural rubber, wherein the surfactant is selected from the group including nonionic, ionic, and amphoteric surfactants, adding from about 1,000 units to about 500,000 units of a lipid reducing enzyme preparation per gram of dry natural rubber, wherein the lipid reducing enzyme preparation is selected from the group including lipases from plant, animal, synthetic and microbial sources, adding a pH buffer to maintain the pH in a range of from about 5 to about 12, mixing the natural rubber latex with the lipid reducing enzyme preparation for a period of between one-half hour to about 24 hours at a temperature of from about 20 °C. to about 60 °C., separating rubber particles into a concentrated rubber phase from the latex by techniques selected from the group including batchwise centrifugation, continuous centrifugation, and creaming, rinsing the concentrated rubber phase with water until the protein content is less than the protein content in the natural rubber latex.

JP2010144001 discloses a method for manufacturing a solid natural rubber includes (I) a process of forming a porous coagulated rubber by mixing a natural rubber latex with (1) an acid and (2) (i) at least one kind of a salt selected from the group consisting of calcium salt, sodium salt, potassium salt or ammonium salt of each of nitric acid, sulfuric acid, carbonic acid, phosphoric acid, hydrochloric acid and formic acid and/or (ii) a polymer coagulant, and (II) a process of mixing the formed porous coagulated rubber with an antioxidant.

JPH11106405A discloses a method for producing deproteinized natural rubber, capable of obtaining highly deproteinized natural rubber through an easy process and in high yield. This method comprises decomposing proteins through adding a protease at 0.01-1 phr to natural rubber latex, adding a creaming agent, e.g. sodium alginate or konjak paste to the protease-treated latex and leaving the mixture at rest, separating the resultant cream layer containing a rubber fraction from the resultant serum layer, recovering the cream fraction, diluting and washing the fraction with water, allowing the washed fraction to stand, then, again, separating the resultant cream layer containing the rubber fraction from the resultant serum layer.

CN103923232A discloses a low protein latex preparation method, which comprises: 1, in a nature latex solution containing 100 parts of a dry rubber, adding 0.2 part of a stabilizer, 5 parts of a sensitizer, 0.1 part of an emulsifier and 1-3 parts of polyvinyl alcohol (PVA), and uniformly stirring to form a latex solution; 2, adding ammonia water, diluting the latex to achieve the dry rubber content of 30%, stirring, and standing for 1.5 h; 3, carrying out a centrifugation treatment for 20 min, and separating the rubber phase and the whey phase of the latex; and 4, filtering to remove the whey to prepare the latex. The method has characteristics of simple production process, high protein removal efficiency and the like.

CN1321691A discloses: (1) a deproteinizing agent for natural rubber latex, comprising a protease and one or more water-soluble polymers as an active component; (2) a deproteinized natural rubber latex, which is prepared by subjecting to a deprotenization treatment using the deproteinizing agent, and a method of producing the same; (3) a method of producing a rubber product, which comprises incorporating at least a vulcanizing agent into the latex (2), dipping a mold in the resulting compound latex, and vulcanizing and drying a rubber film formed on the mold; and (4) a method of producing a rubber product, which comprises incorporating at least a heat sensitizer and a vulcanizing agent into the latex (2), dipping a mold in the resulting heat-sensitive coagulable compound latex, and vulcanizing and drying a rubber film formed on the mold.

### SUMMARY

A technical problem to be solved by the present invention is as follows: natural rubber has an insurmountable shortcoming that the performance thereof varies with collection regions and time of rubber latex, which leads to differences and uncertainties for the processing technology and the product performance; the present invention provides a processing method that could result in a high-purity and fine rubber latex containing rubber particles with more similar sizes and structural characteristics, to reduce the influence of the diversity of rubber components and non-rubber substances on the manufacturing technique and functional performance of articles made by natural rubber latex.

To solve the above technical problem, the present invention provides the following technical solutions.

A processing method of a natural rubber latex by creaming, including the following steps:
step 1), adding a surfactant, a pH regulator, and deionized water into the natural rubber latex to obtain a first mixture, and thoroughly stirring the first mixture at a controlled temperature to obtain a latex system;
step 2), adding a preservative and a creaming agent to the natural rubber latex or the latex system obtained in step 1) to obtain a second mixture, and thoroughly stirring the second mixture, standing the second mixture at a controlled temperature until phase separation occurs, and collecting an upper rubber latex phase and a lower skim latex phase, respectively;
step 3), diluting the upper rubber latex phase obtained in step 2) with deionized water, adding a preservative, a pH regulator, a surfactant, and a creaming agent to obtain a third mixture, and thoroughly stirring the third mixture, standing the third mixture at a controlled temperature until phase separation occurs, and collecting an upper rubber latex phase; and repeating the above steps for a plurality of times, wherein the more the repeating times, the purer an obtained rubber latex. An upper rubber latex phase finally collected is a natural rubber latex with high rubber purity and dense rubber particle size distribution, and the natural rubber latex almost contains no non-rubber substances and mainly contains rubber particles with large sizes; and
step 4), subjecting one of the lower skim latex phases obtained in step 2) and step 3) or a combination of at least two of the lower skim latex phases obtained at different times to concentration by centrifugation or diluting with deionized water, adding a preservative, a pH regulator, a surfactant, and a creaming agent to obtain a fourth mixture, and thoroughly stirring the fourth mixture; standing the fourth mixture at a controlled temperature until phase separation occurs, and collecting an upper rubber latex phase; repeating the above steps for a plurality of times, wherein the more the repeating times, the purer an obtained rubber latex. An upper rubber latex phase finally collected is a natural rubber latex with high rubber purity and dense rubber particle size distribution. The natural rubber latex basically contains no non-rubber substances, and the sizes of rubber particles contained therein are related to the lower skim latex phase selected, that is, the more the separation times of the lower skim latex phase are, the smaller the size of the rubber particles contained in the correspondingly obtained upper rubber latex phase is.

In some embodiments, the processing method further comprises in step 2), adding urea and derivatives thereof or a protease before adding a preservative and a creaming agent to the natural rubber latex or the latex system obtained in step 1) and stirring.

In some embodiments, the processing method further comprises adding a polar organic solvent while adding the urea and derivatives thereof or the protease, and then a thoroughly stirring a resulting mixture.

In some embodiments, the urea and derivatives thereof are at least one selected from the group consisting of urea, methyl urea, ethyl urea, *n*-propyl urea, isopropyl urea, *n*-butyl urea, isobutyl urea, and *n*-pentyl urea, and are added in an amount of 0.0001% to 20% of a weight of the natural rubber latex; the protease is at least one selected from the group consisting of alkaline protease, 2079 alkaline protease, trypsin, proteolytic enzyme papain, bromelain, and superase bacterial protease, and is added in an amount of 0.0001% to 15% of the weight of the natural rubber latex.

In some embodiments, the polar organic solvent is at least one selected from the group consisting of methanol, ethanol, diethyl ether, dioxane, tetrahydrofuran (THF), ethylene oxide, cyclohexane, acetone, dihydroxyacetone (DHA), propanol, 2-propanol, n-butanol, dimethyl sulfoxide (DMSO), and dimethylacetamide (DMA), and is added in an amount of 0.0001% to 30% of the weight of the natural rubber latex.

In some embodiments, the natural rubber latex in steps 1) and 2) is one selected from the group consisting of fresh rubber latex from *Hevea brasiliensis* and concentrated rubber latex/skim latex thereof, *Eucommia ulmoides* rubber latex and concentrated rubber latex/skim latex thereof, and *Parthenium argentatum* rubber latex and concentrated rubber latex/skim latex thereof, and the natural rubber latex has a mass content of dry rubber of 0.5% to 70%.

In some embodiments, the pH regulator in steps 1) and 3) is at least one selected from the group consisting of monopotassium phosphate (MKP), dipotassium phosphate (DKP), monosodium phosphate (MSP), disodium phosphate (DSP), sodium phosphate, potassium acetate, sodium acetate, sulfuric acid, hydrochloric acid, nitric acid, acetic acid, succinic acid, citric acid, sodium hydroxide, ammonia water, potassium hydroxide, sodium carbonate, and sodium bicarbonate, and is added in an amount of 0.0001% to 10% of the weight of the natural rubber latex for adjusting a pH value to 8 to 11. In some embodiments, the surfactant in steps 1), 3), and 4) is at least one selected from the group consisting of a non-ionic surfactant, an anionic surfactant, a cationic surfactant, and an amphoteric surfactant, and is added in an amount of 0.0001% to 20% of the weight of the natural rubber latex.

In some embodiments, the non-ionic surfactant is at least one selected from the group consisting of a polyoxyalkylene ester surfactant, a polyol fatty acid ester surfactant, a polyoxyalkylene ether surfactant, an alkyl polyglucoside (APG) surfactant, and a sugar fatty acid ester surfactant. In some embodiments, the anionic surfactant is at least one selected from the group consisting of diphenyl ether sulfonate, alkylbenzene sulfonate, alkyl naphthalene sulfonate, naphthalene sulfonate, alkyl sulfonate, dialkyl sulfosuccinate, α-olefin sulfonate, α-sulfonated fatty acid salt, alkyl sulfate, polyoxyalkylene stilbene phenol sulfate, polyoxyalkylene sulfate, tristyrene phenol sulfate, polyoxyalkylene phenyl ether sulfate, alkyl sulfate ester salt, polyoxyalkylene alkyl sulfate, polyoxyalkylene alkyl phenyl ether sulfate, polyoxyalkylene tristyrenated phenol sulfate, polyoxyalkylene distyrenated phenol sulfate, alkyl phosphate, polyoxyalkylene phosphate, alkyl phosohate salt, and polyoxyalkylene phosphate salt. In some embodiments, the cationic surfactant is at least one selected from the group consisting of imidazolinium salt, alkyl amine salt, an alkyl amine derivative, and an alkyl amine quaternary ammonium compound. In some embodiments, the amphoteric surfactant is at least one selected from the group consisting of an amino acid surfactant, an amine oxide surfactant, and a betaine surfactant.

In some embodiments, the preservative in steps 2), 3) and 4) is at least one selected from the group consisting of zinc oxide, benzoic acid, sodium benzoate, ammonium naphthenate, polyhexamethyleneguanidine (PHMG) and polymer derivatives thereof, tetramethylthiuram disulfide, calcium propionate, sodium diacetate, methyl *p-*hydroxybenzoate, ethyl *p*-hydroxybenzoate, propyl *p*-hydroxybenzoate, butyl *p-*hydroxybenzoate, and potassium sorbate, and is added in an amount of 0.0001% to 20% of the weight of the natural rubber latex. In some embodiments, the creaming agent in steps 2), 3) and 4) is at least one selected from the group consisting of a natural water-soluble polymer and modified water-soluble polymers thereof, and a synthetic water-soluble polymer, and is added in an amount of 0.0001% to 40% of the weight of the natural rubber latex.

In some embodiments, the natural water-soluble polymer and modified water-soluble polymers thereof are at least one selected from the group consisting of gum arabic, linseed gum, guar gum, bone glue, carrageenan, gelatin, locust bean gum, pectin, xanthan gum, konjac gum, tannin extract, carrageenan, *Abelmoschus manihot* gum, *bletilla hyacinthina* gum, trehalose, ammonium alginate, sodium alginate, calcium alginate, potassium alginate, propylene glycol alginate (PGA), chitosan, chitosan oligosaccharide, water-soluble chitosan, carboxylated chitosan, chitosan salt, chitosan sulfate, hyaluronic acid-like chitosan, a copolymer of chitosan and polyvinylpyrrolidone (PVP), mucopolysaccharide, hyaluronic acid, carboxymethyl cellulose (CMC), hydroxyethyl cellulose (HEC), hydroxypropyl cellulose (HPC), methyl cellulose, ethyl cellulose, and cellulose xanthate. In some embodiments, the synthetic water-soluble polymer is at least one selected from the group consisting of polyethyleneimine, Carbopoi resin, aluminum magnesium silicate, polyvinyl alcohol (PVA), PVA copolymer, polyacrylamide (PAM), PAM copolymer, polyacrylic acid, sodium polyacrylate, PVP, PVP copolymer, polyethylene glycol (PEG), quaternary ammonium salt polymer, polyoxyethylene, polyoxyethylene ether, polyoxypropylene, and polyglycerol glycidyl ether.

In some embodiments, the stirring in steps 1), 2), 3) and 4) is conducted for 20 min to 48 h at a temperature of 5 °C to 55 °C and a stirring speed of 30 rpm to 600 rpm, and the standing is conducted for 5 h to 10 days at a temperature of 5 °C to 55 °C.

In some embodiments, the phase separation in steps 2), 3) and 4) is identified by a visual inspection, a transmittance contrast, or an ultrasonic detection.

The present invention further provides use of the above processing method of natural rubber latex by creaming in reducing a content of non-rubber components in natural rubber latex.

The present invention further provides a rubber latex obtained by the above processing method of natural rubber latex by creaming.

The present invention provides a natural rubber latex with a stable structure and composition to improve the mechanical precision of products manufactured therefrom. Moreover, the processing method provided by the present invention does not require high-speed centrifugation, thus avoiding the damage to a rubber molecular chain by high-speed shearing force and keeping the excellent performance of rubber particles themselves to the greatest extent.

The processing method provided by the present invention does not require any centrifugation steps and semipermeable membrane conditions for natural rubber latex, such that rubber particles in the natural rubber latex remain in an intact form. In addition, the processing method provided by the present invention does not require mechanical equipment with high requirements, such as centrifuges, and thus almost has no limitations in large-scale production. Non-rubber components, such as protein, phosphate, and phospholipid, in natural rubber latex are present in the structure by participating in the branching of rubber molecular chains, and many are also freely dispersed in a water phase or weakly attached to the surface of rubber particles. In the present invention, reagents such as a surfactant and a creaming agent are added into natural rubber latex to make rubber particles aggregate without flocculation, thus achieving creaming. Rubber has a specific gravity of 0.93 g/cm³, and non-rubber components have a specific gravity of 1.03 g/cm³. The size of rubber particles is related to the content of non-rubber components attached to the surface thereof, namely, related to the specific gravity. In a slurry undergoing creaming, rubber particles with a high specific gravity and free non-rubber substances are easy to settle at the bottom of the slurry, rubber particles with a low specific gravity are easy to float at the top of the slurry, and rubber particles with close specific gravities, namely, those with similar sizes, are easily concentrated in the same region of the slurry. Given the different specific gravities of large rubber particles and small rubber particles, sedimentation or floating could make rubber particles with similar particle sizes gather in the same phase. Liquid phases in different regions have different solid contents, and phase interfaces could be identified by a visual inspection, a transmittance contrast or an ultrasonic detection to achieve effective separation. The rubber latex in a desired phase is collected and separated from the slurry rich in free non-rubber substances at the bottom.

In the present invention, the protease, urea and polar organic solvent are added to thoroughly decompose and remove non-rubber components such as proteins and phospholipids inside and on the surface of rubber particles. The creaming agent and pH regulator are added and the stirring time and temperature are set to disrupt the original emulsion balance of rubber particles, thus realizing the dispersion, recombination and reaggregation of the rubber particles. The surfactant is a protective agent that maintains the aggregation of the rubber particles without flocculation. According to different purposes, these relevant steps could be arbitrarily selected for processing natural rubber latex by creaming, and obtained products could be used in diversified applications.

Conventional natural rubber tends to harden over time during storage (storage hardening). Therefore, it needs to be plasticized before use. The natural rubber latex processed by creaming in the present invention basically contains no non-rubber components such as proteins, such that natural rubber obtained from coagulation of the processed rubber latex will no longer undergo storage hardening and exhibits a low Mooney viscosity and excellent processing properties, which is equal to or even better than synthetic rubber especially in terms of transparency and colorless appearance.

The present invention has the following technical effects:

In the present invention, the content of non-rubber components in natural rubber latex is reduced by processing by creaming. The processing method using a phase separation by creaming has low requirements on equipment, and is simple and easy to be operated, and thus is suitable for industrial production. The size and structure of rubber particles in the obtained rubber latex are controllable, which avoids the uncertainty of the contents of large rubber particles and small rubber particles in the natural rubber latex, and solves the problem present in processing natural rubber for a long time that the performance of natural rubber is affected by the source and collection time of rubber latex. Compared with the rubber latex recovered by centrifugal separation, the natural rubber latex produced according to the present invention has rubber particles with more similar sizes and structures, and includes a very low content of free non-rubber substances. The obtained rubber latex has stable processing performance, and products manufactured therefrom have stable functional performance, which is not affected by the time and region of collecting rubber latex.

The natural rubber latex obtained by the processing method of the present invention could be applied to the prevention of allergies caused by natural rubber, such as surgical gloves, examination gloves, protective films, masks, medical self-adhesive bandages and adhesives, tires, and shockproof pads.

### DETAILED DESCRIPTION OF THE EMBODIMENTS

In order to make the present invention more understandable, preferred examples are provided for detailed illustration as follows.

### Example 1

100 parts by weight (solid matrix) of commercially available high-ammonia natural rubber latex (with a dry rubber content of 60 wt%) was used as natural rubber latex to be processed by creaming. The commercially available high-ammonia natural rubber latex was poured into a container made by glass or other transparent material, and 10 parts by weight of a 10 wt% surfactant (shown in Table 1) aqueous solution and 5 parts by weight of a 10 wt% preservative (a mixture of sodium benzoate and ammonium naphthenate in a weight ratio of 50:50) aqueous solution were added, respectively. The resulting mixture was added with deionized water to obtain a total solid content of 40 wt%. The pH was adjusted to 10 with a pH regulator (a mixture of potassium hydroxide and dipotassium phosphate (DKP) in a weight ratio of 70:30), and the temperature was controlled at 25 °C. The resulting mixture was stirred at a rotational speed of 120 rpm for 2 h and then stood for 2 h. Then, 10 parts by weight of a 5 wt% creaming agent (shown in Table 1) aqueous solution were added, and deionized water was replenished to obtain a total solid content of 25 wt%. The resulting solution was stirred at a rotational speed of 100 rpm and a controlled temperature of 25 °C for more than 4 h to make the solution uniformly mixed, and then stood for 48 h. A creaming state was observed by visual inspection, the resulting upper rubber latex and lower rubber latex were collected and weighed, respectively, and the solid contents thereof were determined. A small part of the upper rubber latex was diluted or coagulated by thermal evaporation for determining the particle size distribution and aqueous extractable protein thereof. The particle size test was conducted using a Malvern ZEN3700 laser particle size analyzer at 25 °C. The ratio of large rubber particles to small rubber particles could be calculated according to a particle size bimodal distribution curve. The remaining upper rubber latex was reused as natural rubber latex to be processed by creaming, and repeatedly subjected to the above operations for two cycles. The results are shown in Table 1.

**Table 1 (Examples 1 to 10)**

| Example | Surfactant | Creaming agent (weight ratio) | Creaming rate ^{a} (wt%) | Solid content (wt%) of the upper/lower layer | Large rubber particles/s mall rubber particles ^{e} (wt%) | Aqueous extractable protein ^{f} (µg/g) | Non-rubber substance content (wt%) |
|---|---|---|---|---|---|---|---|
| **1** | Trialkylsulfoalkylene ammonium betaine | A mixture of polyoxyethylene ether and hyaluronic acid (40:60) | ^{b} 88 | ^{b} 27/8 | ^{b} 86:14 | ^{b} <80 | ^{b} <0.5 |
| | | | ^{c} 90 | ^{c} 27/6 | ^{c} 90:10 | ^{c} <60 | ^{c} <0.3 |
| | | | ^{d} 90 | ^{d} 28/4 | ^{d} 93:7 | ^{d}<20 | ^{d} <0.2 |
| **2** | Sodium dodecyl sulfate (SDS) | A mixture of sodium polyacrylate and xanthan gum (30:70) | ^{b} 59 | ^{b} 40/5 | ^{b} 88:12 | ^{b} <50 | ^{b} <0.5 |
| | | | ^{c} 60 | ^{c} 41/3 | ^{c} 91:9 | ^{c} <30 | ^{c} <0.2 |
| | | | ^{d} 60 | ^{d} 43/2 | ^{d} 95:5 | ^{d}<10 | ^{d} <0.1 |
| **3** | Sodium dodecyl benzene sulfonate (SDBS) | A mixture of polyvinyl alcohol (PVA) and polyacrylamide (PAM) (40:60) | ^{b} 63 | ^{b} 35/7 | ^{b} 86:14 | ^{b} <50 | ^{b} <0.5 |
| | | | ^{c} 65 | ^{c} 37/5 | ^{c} 90:10 | ^{c} <40 | ^{c} <0.2 |
| | | | ^{d} 65 | ^{d} 37/3 | ^{d} 94:6 | ^{d}<10 | ^{d} <0.1 |
| **4** | Sodium 1-naphthalenesulfonate | A mixture of polyethylene glycol (PEG) and polyvinylpyrrolidone (PVP) (40:60) | ^{b} 38 | ^{b} 55/8 | ^{b} 83:17 | ^{b} <80 | ^{b} <0.7 |
| | | | ^{c} 40 | ^{c} 55/5 | ^{c} 88:12 | ^{c} <60 | ^{c} <0.4 |
| | | | ^{d} 44 | ^{d} 55/3 | ^{d} 90:10 | ^{d}<30 | d<0.3 |
| **5** | Sodium dodecyl diphenyl ether disulfonate | A mixture of a PVA-grafted poly(ε-caprolactone) copolymer and pectin (50:50) | ^{b} 43 | ^{b} 47/6 | ^{b} 87:13 | ^{b} <60 | ^{b} <0.6 |
| | | | ^{c} 50 | ^{c} 50/4 | ^{c} 90:10 | ^{c} <50 | ^{c} <0.3 |
| | | | ^{d} 50 | ^{d} 50/4 | ^{d} 91:9 | ^{d} <20 | ^{d} <0.3 |
| **6** | Polyoxyalkylene stilbene phenol sodium sulfate | A mixture of PAM and sodium alginate (30:70) | ^{b} 63 | ^{b} 37/5 | ^{b} 87:13 | ^{b} <80 | ^{b} <0.7 |
| | | | ^{c} 65 | ^{c} 38/5 | ^{c} 92:8 | ^{c} <70 | ^{c} <0.5 |
| | | | ^{d} 65 | ^{d} 38/4 | ^{d} 97:3 | ^{d} <30 | ^{d} <0.2 |
| **7** | Polyoxyalkylene tristyrenated phenol ether | A mixture of PVA and propylene glycol alginate (PGA) (50:50) | ^{b} 60 | ^{b} 37/10 | ^{b} 84:16 | ^{b} <80 | ^{b} <0.6 |
| | | | ^{c} 61 | ^{c} 37/8 | ^{c} 85:15 | ^{c} <70 | ^{c} <0.4 |
| | | | ^{d} 61 | ^{d} 38/7 | ^{d} 89:11 | ^{d} <50 | ^{d} <0.4 |
| **8** | Ammonium diphenyl ether sulfonate | A mixture of polyglycerol glycidyl ether and carboxylated chitosan (60:40) | ^{b} 73 | ^{b} 30/6 | ^{b} 85:15 | ^{b} <80 | ^{b} <0.7 |
| | | | ^{c} 75 | ^{c} 31/6 | ^{c} 88:1 | ^{c} <60 | ^{c} <0.4 |
| | | | ^{d} 75 | ^{d} 32/4 | ^{d} 91:9 | ^{d}<30 | ^{d}<0.3 |
| **9** | Polyoxyalkylene alkyl phenyl ether | A mixture of polypyrrolidone-grafted chitosan copolymer and a tannin extract (60:40) | ^{b} 40 | ^{b} 58/7 | ^{b} 84:16 | ^{b} <80 | ^{b} <0.7 |
| | | | ^{c} 40 | ^{c} 59/7 | ^{c} 86:14 | ^{c} <70 | ^{c} <0.5 |
| | | | ^{d} 42 | ^{d} 59/5 | ^{d} 89:11 | ^{d}<20 | ^{d} <0.4 |
| **10** | Sodium octadecylamine acetate and alkyl polyglucoside (APG) | A mixture of carboxymethyl cellulose (CMC) and carrageenan (50:50) | ^{b} 69 | ^{b} 33/8 | ^{b} 87:15 | ^{b} <60 | ^{b} <0.5 |
| | | | ^{c} 71 | ^{c} 35/7 | ^{c} 91:9 | ^{c} <40 | ^{c} <0.3 |
| | | | ^{d} 71 | ^{d} 35/5 | ^{d} 92:8 | ^{d} <20 | ^{d} <0.2 |

| | | | | | | | |
|---|---|---|---|---|---|---|---|
| in which, ^{a} : creaming rate = (weight of upper rubber latex/weight of total rubber latex) × 100%; ^{b} : one cycle, ^{c} : two cycles, and ^{d} : three cycles; ^{e} : large rubber particles have a particle size of greater than 250 nm, and small rubber particles have a particle size of less than or equal to 250 nm; and ^{f} : ASTM D5712 film water-soluble protein detection. | | | | | | | |

### Example 11

100 parts by weight (solid matrix) of fresh natural rubber latex (Fresh NR: with a dry rubber content of 30 wt%) were used as natural rubber latex to be processed by creaming. The natural rubber latex was poured into a container made of glass or other transparent material, and 10 parts by weight of a 10 wt% SDS aqueous solution, 1 part by weight of a 10 wt% urea aqueous solution, 10 parts by weight of a 5 wt% ethyl p-hydroxybenzoate aqueous solution, and 1 part by weight of a 10 wt% ethanol aqueous solution were added. The pH was adjusted to 10.5 with a pH regulator (a mixture of potassium hydroxide and ammonia water), and the temperature was controlled at 30 °C. The resulting mixture was stirred at a rotational speed of 160 rpm for 3 h and then stood for 3 h. 20 parts by weight of a 2 wt% creaming agent (a mixture of polyoxyethylene ether and locust gum in a weight ratio of 20:80) aqueous solution were added, and deionized water was replenished to obtain a total solid content of 15 wt%. The resulting solution was stirred at a rotational speed of 100 rpm for 6 h to make the solution uniformly mixed, and then stood for 2 days. A creaming state was observed by visual inspection, and the resulting upper rubber latex and lower rubber latex were collected and weighed, respectively, and the solid contents thereof were determined. A small part of the upper rubber latex and lower rubber latex were taken respectively and then diluted or coagulated by thermal evaporation for determining the particle size distribution, aqueous extractable protein, and non-rubber substance content. The particle size test was conducted using a Malvern ZEN3700 laser particle size analyzer at 25 °C. The ratio of large rubber particles to small rubber particles could be calculated according to a particle size bimodal distribution curve. The results are shown in Table 2.

**Table 2 (Example 11)**

| Example 13 | Creaming rate ^{a} (wt%) | Solid content (wt%) | Large rubber particles/small rubber particles ^{b} (wt%) | Aqueous extractable protein ^{c} (µg/g) | Non-rubber substance content (wt%) |
|---|---|---|---|---|---|
| Upper layer | 23 | 46 | 80:20 | <100 | <1.0 |
| Lower layer | 77 | 7 | 21:79 | >400 | >4.0 |

| | | | | | |
|---|---|---|---|---|---|
| in which, ^{a} : creaming rate = (weight of rubber latex in the upper layer or lower layer/weight of total rubber latex) × 100%; ^{b} : large rubber particles have a particle size of greater than 250 nm, and small rubber particles have a particle size of less than or equal to 250 nm; and ^{c} : ASTM D5712 film water-soluble protein detection. | | | | | |

The remaining upper rubber latex was reused as natural rubber latex to be processed by creaming, and subjected to the following operations in Examples 12 to 16. The remaining lower rubber latex was reused as natural rubber latex to be processed by creaming, and subjected to the following operations in Examples 17 to 21.

### Examples 12 to 16

The remaining upper rubber latex in Example 11 was poured into a container made of glass or other transparent material as natural rubber latex to be processed by creaming, and the following steps were conducted: based on 100 parts by weight (solid matrix) of the upper rubber latex, 10 parts by weight of a 5 wt% surfactant (shown in Table 3) aqueous solution and 5 parts by weight of a 5 wt% preservative (a mixture of polyhexamethyleneguanidine (PHMG) and ammonium naphthenate in a weight ratio of 50:50) aqueous solution were added, and then deionized water was replenished to obtain a total solid content of 40 wt%. The pH was adjusted to 11 with a pH regulator (a mixture of monopotassium phosphate (MKP) and ammonia water in a weight ratio of 50:50), and the temperature was controlled at 30 °C. The resulting mixture was stirred at a rotational speed of 100 rpm for 2 h and then stood for 2 h. 8 parts by weight of a 5 wt% creaming agent (shown in Table 3) aqueous solution were added, and deionized water was replenished to obtain a total solid content of 20 wt%. The resulting solution was stirred at a rotational speed of 100 rpm and a controlled temperature of 30°C for 4 h to make the solution uniformly mixed, and then stood for 24 h. A creaming state was observed by visual inspection, the resulting upper rubber latex and lower rubber latex were collected and weighed, respectively, and the solid contents thereof were determined. A small part of the upper rubber latex was diluted or coagulated by thermal evaporation for determining the particle size distribution and aqueous extractable protein. The particle size test was conducted using a Malvern ZEN3700 laser particle size analyzer at 25 °C. The ratio of large rubber particles to small rubber particles could be calculated according to a particle size bimodal distribution curve. The remaining upper rubber latex was reused as natural rubber latex to be processed by creaming, and repeatedly subjected to the above operations for two cycles. The results are shown in Table 3.

**Table 3 (Examples 12 to 16)**

| Example | Surfactant | Creaming agent (weight ratio) | Creaming rate ^{a} (wt%) | Solid content (wt%) in the upper layer/lower layer | Large rubber particles/sm all rubber particles ^{e} (wt%) | Aqueous extractable protein ^{f} (µg/g) | Non-rubber substance content (wt%) |
|---|---|---|---|---|---|---|---|
| **12** | Trialkylsulfoalkylene ammonium betaine | PVA-grafted polyglycidyl methacrylate (PGMA) copolymer | ^{b} 70 | ^{b} 27/5 | ^{b} 88:12 | ^{b} <50 | ^{b} <0.6 |
| | | | ^{c} 70 | ^{c} 27/4 | ^{c} 90:10 | ^{c} <40 | ^{c} <0.3 |
| | | | ^{d} 71 | ^{d} 29/3 | ^{d} 94:6 | ^{d}<10 | ^{d} <0.2 |
| **13** | SDS | A mixture of polyoxyethylene ether and locust gum (50:50) | ^{b} 45 | ^{b} 44/4 | ^{b} 88:12 | ^{b} <60 | ^{b} <0.5 |
| | | | ^{c} 45 | ^{c} 46/4 | ^{c} 91:9 | ^{c} <50 | ^{c} <0.2 |
| | | | ^{d} 46 | ^{d} 47/2 | ^{d} 95:5 | ^{d} <20 | ^{d} <0.1 |
| **14** | SDBS | A mixture of PVA and gelatin (50:50) | ^{b} 65 | ^{b} 28/6 | ^{b} 87:14 | ^{b} <70 | ^{b} <0.7 |
| | | | ^{c} 66 | ^{c} 29/5 | ^{c} 90:10 | ^{c} <40 | ^{c} <0.5 |
| | | | ^{d} 66 | ^{d} 29/3 | ^{d} 91:9 | ^{d} <30 | ^{d} <0.3 |
| **15** | Sodium 1-naphthalenesulfonate | A mixture of PEG and sodium polyacrylate (50:50) | ^{b} 60 | ^{b} 30/5 | ^{b} 83:17 | ^{b} <80 | ^{b} <0.7 |
| | | | ^{c} 60 | ^{c} 31/5 | ^{c} 89:11 | ^{c} <60 | ^{c} <0.5 |
| | | | ^{d} 61 | ^{d} 32/2 | ^{d} 90:10 | ^{d} <30 | ^{d} <0.4 |
| **16** | Sodium dodecyl diphenyl ether disulfonate | PVA-grafted polypyrrolidone copolymer | ^{b} 55 | ^{b} 33/6 | ^{b} 87:13 | ^{b} <70 | ^{b} <0.7 |
| | | | ^{c} 56 | ^{c} 34/6 | ^{c} 89:11 | ^{c} <50 | ^{c} <0.5 |
| | | | ^{d} 56 | ^{d} 35/4 | ^{d} 91:9 | ^{d} <20 | ^{d} <0.4 |

| | | | | | | | |
|---|---|---|---|---|---|---|---|
| in which, ^{a} : creaming rate = (weight of upper rubber latex/weight of total rubber latex) × 100%; ^{b} : one cycle, ^{c} : two cycles, and ^{d} : three cycles; ^{e} : large rubber particles have a particle size of greater than 250 nm, and small rubber particles have a particle size of less than or equal to 250 nm; and ^{f} : ASTM D5712 film water-soluble protein detection. | | | | | | | |

### Examples 17 to 21

The remaining lower rubber latex in Example 11 was poured into a container made of glass or other transparent material as natural rubber latex to be processed by creaming, and the following steps were conducted: Based on 100 parts by weight (solid matrix) of the lower rubber latex, 6 parts by weight of a 5 wt% creaming agent (shown in Table 4) aqueous solution and 2 parts by weight of a 10 wt% preservative (a mixture of PHMG and potassium sorbate in a weight ratio of 70:30) aqueous solution were added. The pH was adjusted to 10 with a pH regulator (a mixture of MKP and citric acid), and the temperature was controlled at 25 °C. The resulting solution was stirred at a rotational speed of 180 rpm for 4 h to make the solution uniformly mixed, and then stood for 3 days. A creaming state was observed by visual inspection, the resulting upper rubber latex and lower rubber latex were collected and weighed, respectively, and the solid contents thereof were determined. A small part of the lower rubber latex was diluted or coagulated by thermal evaporation for determining the particle size distribution and aqueous extractable protein. The particle size test was conducted using a Malvern ZEN3700 laser particle size analyzer at 25 °C. The ratio of large rubber particles to small rubber particles could be calculated according to a particle size bimodal distribution curve. The remaining lower rubber latex was reused as natural rubber latex to be processed by creaming, and repeatedly subjected to the above operations for one cycle. The results are shown in Table 4.

**Table 4 (Examples 17 to 21)**

| Example | Creaming agent (weight ratio) | Creaming rate ^{a} (wt%) | Solid content (wt%) in the upper layer/lower layer | Large rubber particles/small rubber particles ^{d} (wt%) | Aqueous extractable protein ^{e}(µg/g) | Non-rubber substance content (wt%) |
|---|---|---|---|---|---|---|
| **17** | A mixture of hyaluronic acid-like chitosan and konjac gum (50:50) | ^{b} 55 | ^{b} 10/2 | ^{b} 18;82 | ^{b} >600 | ^{b} >10 |
| | | ^{c} 55 | ^{c} 6/1 | ^{c} 13:87 | ^{c} >900 | ^{c} >13 |
| **18** | A mixture of polyglycerol glycidyl ether and pectin (30:70) | ^{b} 41 | ^{b} 13/3 | ^{b} 19:81 | ^{b} >600 | ^{b} >10 |
| | | ^{c} 42 | ^{c} 5/1 | ^{c} 15:85 | ^{c} >1000 | ^{c} >15 |
| **19** | A mixture of PVA and guar gum (50:50) | ^{b} 59 | ^{b} 9/3 | ^{b} 19:81 | ^{b} >600 | ^{b} >10 |
| | | ^{c} 61 | ^{c} 5/1 | ^{c} 12:88 | ^{c} >1000 | ^{c} >15 |
| **20** | A mixture of PEG and ammonium alginate (50:50) | ^{b} 45 | ^{b} 11/3 | ^{b} 19:81 | ^{b} >600 | ^{b} >10 |
| | | ^{c} 45 | ^{c} 7/1 | ^{c} 16:84 | ^{c} >1000 | ^{c} >15 |
| **21** | A mixture of CMC and calcium alginate (10:90) | ^{b} 50 | ^{b} 10/2 | ^{b} 17:83 | ^{b} >600 | ^{b} >10 |
| | | ^{c} 51 | ^{c} 6/1 | ^{c} 12:88 | ^{c} >1000 | ^{c} >14 |

| | | | | | | |
|---|---|---|---|---|---|---|
| in which, ^{a} : creaming rate = (weight of lower rubber latex/weight of total rubber latex) × 100%; ^{b} : one cycle and ^{c} indicates two cycles; ^{d} : large rubber particles have a particle size of greater than 250 nm, and small rubber particles have a particle size of less than or equal to 250 nm; and ^{e} : ASTM D5712 film water-soluble protein detection. | | | | | | |

### Example 22

100 parts by weight (solid matrix) of fresh natural rubber latex (Fresh NR: with a dry rubber content of 30 wt%) were used as natural rubber latex to be processed by creaming. The natural rubber latex was poured into a container made of glass or other transparent material, and 15 parts by weight of a 10 wt% surfactant (a mixture of SDS and polyoxyalkylene ether in a weight ratio of 70:30) aqueous solution, 2 parts by weight of a 10 wt% alkaline protease aqueous solution, 10 parts by weight of a 5 wt% ammonium naphthenate aqueous solution, and 1 part by weight of a 10 wt% methanol aqueous solution were added. The pH was adjusted to 11 with a pH regulator (a mixture of potassium hydroxide and ammonia water), and the temperature was controlled at 38 °C. The resulting solution was stirred at a rotational speed of 100 rpm for 48 h, heated to 70 °C and kept at this temperature for 30 min, and then cooled to ambient temperature. 10 parts by weight of a 2 wt% creaming agent (a mixture of sodium polyacrylate and carboxylated chitosan in a weight ratio of 10:90) aqueous solution were added, and deionized water was replenished to obtain a total solid content of 15 wt%. The resulting solution was stirred at a rotational speed of 120 rpm for 6 h to make the solution uniformly mixed, and then stood for 2 days. A creaming state was observed by visual inspection based on light transmission, the resulting upper rubber latex and lower rubber latex were collected and weighed, respectively, and the solid contents thereof were determined. A small part of the upper rubber latex and lower rubber latex were taken respectively and diluted or coagulated by thermal evaporation for determining the particle size distribution, aqueous extractable protein, and non-rubber substance content. The particle size test was conducted using a Malvern ZEN3700 laser particle size analyzer at 25 °C. The ratio of large rubber particles to small rubber particles could be calculated according to a particle size bimodal distribution curve. The results are shown in Table 5.

**Table 5 (Example 22)**

| Example 24 | Creaming rate ^{a} (wt%) | Solid content (wt%) | Large rubber particles/small rubber particles ^{b} (wt%) | Aqueous extractable protein ^{c} (µg/g) | Non-rubber substance content (wt%) |
|---|---|---|---|---|---|
| Upper layer | 40 | 30 | 81:19 | <100 | <1.0 |
| Lower layer | 60 | 5 | 10:90 | >300 | >2.0 |

| | | | | | |
|---|---|---|---|---|---|
| in which, ^{a} : creaming rate = (weight of rubber latex in the upper layer or lower layer/weight of total rubber latex) × 100%; ^{b} : large rubber particles have a particle size of greater than 250 nm, and small rubber particles have a particle size of less than or equal to 250 nm; and ^{c} : ASTM D5712 film water-soluble protein detection. | | | | | |

The remaining upper rubber latex was reused as natural rubber latex to be processed by creaming, and subjected to the following operations in Examples 23 to 27. The remaining lower rubber latex was reused as natural rubber latex to be processed by creaming, and subjected to the following operations in Examples 28 to 32.

### Examples 23 to 27

The remaining upper rubber latex in Example 22 was poured into a container made of glass or other transparent material as natural rubber latex to be processed by creaming, and the following steps were conducted: Based on 100 parts by weight (solid matrix) of the upper rubber latex, 5 parts by weight of a 5 wt% surfactant (shown in Table 6) aqueous solution, 5 parts by weight of a 5 wt% creaming agent (shown in Table 6) aqueous solution, and 2 parts by weight of a 5 wt% PHMG aqueous solution were added, and then deionized water was replenished to obtain a total solid content of 20 wt%. The pH was adjusted to 11 with a pH regulator (a mixture of MKP and ammonia water in a weight ratio of 50:50), and the temperature was controlled at 40 °C. The resulting solution was stirred at a rotational speed of 100 rpm for 4 h to make the solution uniformly mixed, cooled to ambient temperature, and then stood for 24 h. A creaming state was observed by visual inspection based on light transmission, the resulting upper rubber latex and lower rubber latex were collected and weighed, respectively, and the solid contents thereof were determined. A small part of the upper rubber latex was diluted or coagulated by thermal evaporation for determining the particle size distribution and aqueous extractable protein. The particle size test was conducted using a Malvern ZEN3700 laser particle size analyzer at 25 °C. The ratio of large rubber particles and small rubber particles could be calculated according to a particle size bimodal distribution curve. The remaining upper rubber latex was reused as natural rubber latex to be processed by creaming, and repeatedly subjected to the above operations for two cycles. The results are shown in Table 6.

**Table 6 (Examples 23 to 27)**

| Exampl e | Surfactant | Creaming agent (weight ratio) | Creamin g rate ^{a} (wt%) | Solid content (wt%) in the upper layer/low er layer | Large rubber particles/sma 11 rubber particles ^{e} (wt%) | Aqueous extractabl e protein ^{f} (µg/g) | Non-rubber substanc e content (wt%) |
|---|---|---|---|---|---|---|---|
| **23** | Potassium polyoxyalkylene sulfate | A mixture of PEG and pectin (30:70) | ^{b} 40 | ^{b} 41:6 | ^{b} 85:15 | ^{b} <80 | ^{b} <0.6 |
| | | | ^{c} 40 | ^{c} 44:4 | ^{c} 89:11 | ^{c} <70 | ^{c} <0.3 |
| | | | ^{d} 41 | ^{d} 46:3 | ^{d} 92:8 | ^{d} <40 | ^{d} <0.3 |
| **24** | Sodium polyoxyalkylene alkyl phenyl ether sulfate | A mixture of PAM and konjac gum (50:50) | ^{b} 53 | ^{b} 33:5 | ^{b} 86:14 | ^{b} <80 | ^{b} <0.5 |
| | | | ^{c} 55 | ^{c} 34:4 | ^{c} 90:10 | ^{c} <60 | ^{c} <0.3 |
| | | | ^{d} 55 | ^{d} 35:4 | ^{d} 93:7 | ^{d} <30 | ^{d} <0.2 |
| **25** | Sodium 1-naphthalenesulfonate | A mixture of PVA and Carbomer (50:50) | ^{b} 60 | ^{b} 29:6 | ^{b} 85:15 | ^{b} <80 | ^{b} <0.7 |
| | | | ^{c} 60 | ^{c} 31:4 | ^{c} 91:11 | ^{c} <60 | ^{c} <0.5 |
| | | | ^{d} 62 | ^{d} 31:3 | ^{d} 92:8 | ^{d} <30 | ^{d} <0.3 |
| **26** | Potassium polyoxyalkylene phosphate | A mixture of polyoxyethyle ne ether and carboxylated chitosan (50:50) | ^{b} 35 | ^{b} 48:5 | ^{b} 84:16 | ^{b} <80 | ^{b} <0.7 |
| | | | ^{c} 37 | ^{c} 49:4 | ^{c} 89:11 | ^{c} <70 | ^{c} <0.5 |
| | | | ^{d} 37 | ^{d} 51:3 | ^{d} 91:9 | ^{d} <40 | ^{d} <0.4 |
| **27** | SDBS | A mixture of sodium polyacrylate and xanthan gum (20:80) | ^{b} 50 | ^{b} 34:6 | ^{b} 86:14 | ^{b} <80 | ^{b} <0.6 |
| | | | ^{c} 50 | ^{c} 36:4 | ^{c} 91:9 | ^{c} <60 | ^{c} <0.5 |
| | | | ^{d} 51 | ^{d} 36:4 | ^{d} 93:7 | ^{d} <30 | ^{d} <0.2 |

| | | | | | | | |
|---|---|---|---|---|---|---|---|
| in which, ^{a} : creaming rate = (weight of upper rubber latex/weight of total rubber latex) × 100%; ^{b} : one cycle, ^{c} : two cycles, and ^{d} : three cycles; ^{e} : large rubber particles have a particle size of greater than 250 nm, and small rubber particles have a particle size of less than or equal to 250 nm; and ^{f} : ASTM D5712 film water-soluble protein detection. | | | | | | | |

### Examples 28 to 32

The remaining lower rubber latex in Example 22 was poured into a container made of glass or other transparent material as natural rubber latex to be processed by creaming, and the following steps were conducted: Based on 100 parts by weight (solid matrix) of the lower rubber latex, 1 part by weight of a 5 wt% creaming agent (shown in Table 7) aqueous solution and 1 part by weight of a 10 wt% preservative (a mixture of PHMG and ammonium naphthenate in a weight ratio of 50:50) aqueous solution were added. The pH was adjusted to 10.5 with a pH regulator (a mixture of MKP and potassium hydroxide), and the temperature was controlled at 25 °C. The resulting solution was stirred at a rotational speed of 180 rpm for 4 h to make the solution uniformly mixed, and then stood for 4 days. A creaming state was observed by visual inspection, the resulting upper latex and lower rubber latex were collected and weighed, respectively, and the solid contents thereof were determined. A small part of the upper rubber latex was diluted or coagulated by thermal evaporation for determining the particle size distribution and aqueous extractable protein. The particle size test was conducted using a Malvern ZEN3700 laser particle size analyzer at 25 °C. The proportions of large and small rubber particles could be calculated according to a particle size bimodal distribution curve. The remaining upper rubber latex was reused as natural rubber latex to be processed by creaming, and repeatedly subjected to the above operations for one cycle. The results are shown in Table 7.

**Table 7 (Examples 28 to 32)**

| Example | Creaming agent (weight ratio) | Creaming rate ^{a} (wt%) | Solid content (wt%) in the upper layer/lower layer | Large rubber particles/small rubber particles ^{d} (wt%) | Aqueous extractable protein ^{e} (µg/g) | Non-rubber substance content (wt%) |
|---|---|---|---|---|---|---|
| **28** | PVA-grafted poly(isopropylacrylamide) copolymer | ^{b} 60 | ^{b} 9/2 | ^{b} 45:55 | ^{b} <200 | ^{b} <2 |
| | | ^{c} 60 | ^{c} 11/1 | ^{c} 60:40 | ^{c} <100 | ^{c} <1 |
| **29** | A mixture of PAM and carrageenan (50:50) | ^{b} 55 | ^{b} 10/2 | ^{b} 40:60 | ^{b} <200 | ^{b} <2 |
| | | ^{c} 55 | ^{c} 11/2 | ^{c} 58:42 | ^{c} <100 | ^{c} <1 |
| **30** | A mixture of PEG and water-soluble chitosan (30:70) | ^{b} 27 | ^{b} 11/2 | ^{b} 38:62 | ^{b} <200 | ^{b} <2 |
| | | ^{c} 30 | ^{c} 13/1 | ^{c} 54:46 | ^{c} <100 | ^{c} <1 |
| **31** | A mixture of hydroxypropyl cellulose (HPC) and gum arabic (30:70) | ^{b} 35 | ^{b} 9/3 | ^{b} 49:51 | ^{b} <200 | ^{b} <2 |
| | | ^{c} 37 | ^{c} 12/2 | ^{c} 61:30 | ^{c} <100 | ^{c} <1 |
| **32** | PVA-grafted PGMA copolymer | ^{b} 46 | ^{b} 7/3 | ^{b} 34:66 | ^{b} <200 | ^{b} <2 |
| | | ^{c} 46 | ^{c} 9/1 | ^{c} 57:43 | ^{c} <100 | ^{c} <1 |

| | | | | | | |
|---|---|---|---|---|---|---|
| in which, ^{a} : creaming rate = (weight of upper rubber latex/weight of total rubber latex) × 100%; ^{b} : one cycle, ^{c} : two cycles; ^{d} : large rubber particles have a particle size of greater than 250 nm, and small rubber particles have a particle size of less than or equal to 250 nm; and ^{e} : ASTM D5712 film water-soluble protein detection. | | | | | | |

## Claims

1. A processing method of a natural rubber latex by creaming, comprising the following steps:
step 1), adding a surfactant, a pH regulator, and deionized water into the natural rubber latex to obtain a first mixture, and thoroughly stirring the first mixture at a controlled temperature to obtain a latex system;
step 2), adding a preservative and a creaming agent into the natural rubber latex or the latex system obtained in step 1) to obtain a second mixture, and thoroughly stirring the second mixture; standing the second mixture at a controlled temperature until phase separation occurs; and collecting an upper rubber latex phase and a lower skim latex phase, respectively;
step 3), diluting the upper rubber latex phase obtained in step 2) with deionized water; adding a preservative, a pH regulator, a surfactant, and a creaming agent to obtain a third mixture, and thoroughly stirring the third mixture; standing the third mixture at a controlled temperature until phase separation occurs; collecting an upper rubber latex phase; and repeating the above steps for a plurality of times, wherein the more the repeating times, the purer an obtained rubber latex; and
step 4), subjecting one of lower skim latex phases obtained in step 2) and step 3) or a combination of at least two of the lower skim latex phases obtained at different times to concentration by centrifugation or diluting with deionized water; adding a preservative, a pH regulator, a surfactant and a creaming agent to obtain a fourth mixture, and thoroughly stirring the fourth mixture; standing the fourth mixture at a controlled temperature until phase separation occurs; collecting an upper rubber latex phase; and repeating the above steps for a plurality of times, wherein the more the repeating times, the purer an obtained rubber latex.

2. The processing method according to claim 1, further comprising in step 2), adding urea and derivatives thereof or a protease before adding a preservative and a creaming agent to the natural rubber latex or the latex system obtained in step 1) and stirring.

3. The processing method according to claim 2, further comprising adding a polar organic solvent while adding the urea and the derivatives thereof or the protease, and then thoroughly stirring a resulting mixture.

4. The processing method according to claim 2 or 3, wherein the urea and derivatives thereof are at least one selected from the group consisting of urea, methyl urea, ethyl urea, *n*-propyl urea, isopropyl urea, *n*-butyl urea, isobutyl urea, and *n*-pentyl urea, and are added in an amount of 0.0001% to 20% of a weight of the natural rubber latex; and
the protease is at least one selected from the group consisting of alkaline protease, 2079 alkaline protease, trypsin, proteolytic enzyme, papain, bromelain, and superase bacterial protease, and is added in an amount of 0.0001% to 15% of the weight of the natural rubber latex.

5. The processing method according to claim 3, wherein the polar organic solvent is at least one selected from the group consisting of methanol, ethanol, diethyl ether, dioxane, tetrahydrofuran, ethylene oxide, cyclohexane, acetone, dihydroxyacetone, propanol, 2-propanol, *n*-butanol, dimethyl sulfoxide, and dimethylacetamide, and is added in an amount of 0.0001% to 30% of a weight of the natural rubber latex.

6. The processing method according to any one of claims 1 to 3, wherein the natural rubber latex in steps 1) and 2) is one selected from the group consisting of fresh rubber latex from *Hevea brasiliensis* and concentrated rubber latex/skim latex thereof, *Eucommia ulmoides* rubber latex and concentrated rubber latex/skim latex thereof, and *Parthenium argentatum* rubber latex and concentrated rubber latex/skim latex thereof, and the natural rubber latex has a mass content of dry rubber of 0.5% to 70%.

7. The processing method according to any one of claims 1 to 3, wherein the pH regulator in steps 1) and 3) is at least one selected from the group consisting of monopotassium phosphate, dipotassium phosphate, monosodium phosphate, disodium phosphate, sodium phosphate, potassium acetate, sodium acetate, sulfuric acid, hydrochloric acid, nitric acid, acetic acid, succinic acid, citric acid, sodium hydroxide, ammonia water, potassium hydroxide, sodium carbonate, and sodium bicarbonate, and is added in an amount of 0.0001% to 10% of a weight of the natural rubber latex for adjusting a pH value to 8 to 11; and
the surfactant in steps 1), 3) and 4) is at least one selected from the group consisting of a non-ionic surfactant, an anionic surfactant, a cationic surfactant, and an amphoteric surfactant, and is added in an amount of 0.0001% to 20% of the weight of the natural rubber latex.

8. The processing method according to claim 7, wherein the non-ionic surfactant is at least one selected from the group consisting of a polyoxyalkylene ester surfactant, a polyol fatty acid ester surfactant, a polyoxyalkylene ether surfactant, an alkyl polyglucoside surfactant, and a sugar fatty acid ester surfactant;
the anionic surfactant is at least one selected from the group consisting of diphenyl ether sulfonate, alkylbenzene sulfonate, alkyl naphthalene sulfonate, naphthalene sulfonate, alkyl sulfonate, dialkyl sulfosuccinate, α-olefin sulfonate, α-sulfonated fatty acid salt, alkyl sulfate, polyoxyalkylene stilbene phenol sulfate, polyoxyalkylene sulfate, tristyrene phenol sulfate, polyoxyalkylene phenyl ether sulfate, alkyl sulfate ester salt, polyoxyalkylene alkyl sulfate, polyoxyalkylene alkyl phenyl ether sulfate, polyoxyalkylene tristyrenated phenol sulfate, polyoxyalkylene distyrenated phenol sulfate, alkyl phosphate, polyoxyalkylene phosphate, alkyl phosohate salt, and polyoxyalkylene phosphate salt;
the cationic surfactant is at least one selected from the group consisting of imidazolinium salt, alkyl amine salt, an alkyl amine derivative, and an alkyl amine quaternary ammonium compound; and
the amphoteric surfactant is at least one selected from the group consisting of an amino acid surfactant, an amine oxide surfactant, and a betaine surfactant.

9. The processing method according to any one of claims 1 to 3, wherein the preservative in steps 2), 3) and 4) is at least one selected from the group consisting of zinc oxide, benzoic acid, sodium benzoate, ammonium naphthenate, polyhexamethyleneguanidine and polymer derivatives thereof, tetramethylthiuram disulfide, calcium propionate, sodium diacetate, methyl *p*-hydroxybenzoate, ethyl *p-*hydroxybenzoate, propyl *p*-hydroxybenzoate, butyl *p*-hydroxybenzoate, and potassium sorbate, and is added in an amount of 0.0001% to 20% of a weight of the natural rubber latex; and
the creaming agent in steps 2), 3) and 4) is at least one selected from the group consisting of a natural water-soluble polymer and modified water-soluble polymers thereof, and a synthetic water-soluble polymer, and is added in an amount of 0.0001% to 40% of the weight of the natural rubber latex.

10. The processing method according to claim 9, wherein the natural water-soluble polymer and modified water-soluble polymers thereof are at least one selected from the group consisting of gum arabic, linseed gum, guar gum, bone glue, carrageenan, gelatin, locust bean gum, pectin, xanthan gum, konjac gum, tannin extract, carrageenan, *Abelmoschus manihot* gum, *bletilla hyacinthina* gum, trehalose, ammonium alginate, sodium alginate, calcium alginate, potassium alginate, propylene glycol alginate, chitosan, chitosan oligosaccharide, water-soluble chitosan, carboxylated chitosan, chitosan salt, chitosan sulfate, hyaluronic acid-like chitosan, a copolymer of chitosan and polyvinylpyrrolidone, mucopolysaccharide, hyaluronic acid, carboxymethyl cellulose, hydroxyethyl cellulose, hydroxypropyl cellulose, methyl cellulose, ethyl cellulose, and cellulose xanthate; and the synthetic water-soluble polymer is at least one selected from the group consisting of polyethyleneimine, Carbopoi resin, aluminum magnesium silicate, polyvinyl alcohol, a polyvinyl alcohol copolymer, polyacrylamide, a polyacrylamide copolymer, polyacrylic acid, sodium polyacrylate, polyvinylpyrrolidone, a polyvinylpyrrolidone copolymer, polyethylene glycol, a quaternary ammonium salt polymer, polyoxyethylene, polyoxyethylene ether, polyoxypropylene, and polyglycerol glycidyl ether.

11. The processing method according to any one of claims 1 to 3, wherein the stirring in steps 1), 2), 3) and 4) is conducted for 20 min to 48 h at a temperature of 5 °C to 55 °C and a stirring speed of 30 rpm to 600 rpm; and the standing is conducted for 5 h to 10 days.

12. The processing method according to any one of claims 1 to 3, wherein the phase separation in steps 2), 3) and 4) is identified by a visual inspection, a transmittance contrast, or an ultrasonic detection.

## Patentansprüche

1. Verarbeitungsverfahren eines Naturkautschuklatex durch Aufrahmen, umfassend die folgenden Schritte:
Schritt 1), Hinzufügen eines Tensids, eines pH-Regulators und deionisierten Wassers zu dem Naturkautschuklatex, um eine erste Mischung zu erhalten, und gründliches Rühren der ersten Mischung bei einer kontrollierten Temperatur, um ein Latexsystem zu erhalten;
Schritt 2), Hinzufügen eines Konservierungsstoffs und eines Aufrahmungsmittels zu dem Naturkautschuklatex oder dem Latexsystem, das in Schritt 1) erhalten wurde, um eine zweite Mischung zu erhalten, und gründliches Rühren der zweiten Mischung; Stehenlassen der zweiten Mischung bei einer kontrollierten Temperatur, bis eine Phasentrennung auftritt; und Sammeln einer oberen Kautschuklatexphase beziehungsweise einer unteren Skim-Latexphase;
Schritt 3), Verdünnen der oberen Kautschuklatexphase, die in Schritt 2) erhalten wurde, mit deionisiertem Wasser; Hinzufügen eines Konservierungsstoffs, eines pH-Regulators, eines Tensids und eines Aufrahmungsmittels, um eine dritte Mischung zu erhalten, und gründliches Rühren der dritten Mischung; Stehenlassen der dritten Mischung bei einer kontrollierten Temperatur, bis die Phasentrennung auftritt; Sammeln einer oberen Kautschuklatexphase; und Wiederholen der obigen Schritte für eine Vielzahl von Malen, wobei ein erhaltener Kautschuklatex umso reiner ist, je mehr die Male wiederholt werden; und
Schritt 4), Aussetzen einer der unteren Skim-Latexphasen, die in Schritt 2) und Schritt 3) erhalten wurden, oder einer Kombination von mindestens zwei der unteren Skim-Latexphasen, die bei verschiedenen Malen erhalten wurden, gegenüber einer Konzentration durch Zentrifugieren oder Verdünnen mit deionisiertem Wasser; Hinzufügen eines Konservierungsmittels, eines pH-Regulators, eines Tensids und eines Aufrahmungsmittels, um eine vierte Mischung zu erhalten, und gründliches Rühren der vierten Mischung; Stehenlassen der vierten Mischung bei einer kontrollierten Temperatur, bis die Phasentrennung auftritt; Sammeln einer oberen Kautschuklatexphase; und Wiederholen der obigen Schritte für eine Vielzahl von Malen, wobei ein erhaltener Kautschuklatex umso reiner ist, je mehr die Male wiederholt werden.

2. Verarbeitungsverfahren nach Anspruch 1, ferner umfassend, in Schritt 2), das Hinzufügen von Harnstoff und Derivaten davon oder einer Protease vor dem Hinzufügen eines Konservierungsstoffs und eines Aufrahmungsmittels zu dem Naturkautschuklatex oder dem Latexsystem, das in Schritt 1) erhalten wurde, und Rühren.

3. Verarbeitungsverfahren nach Anspruch 2, ferner umfassend das Hinzufügen eines polaren organischen Solvens während des Hinzufügens des Harnstoffs und der Derivate davon oder der Protease und anschließendes gründliches Rühren einer resultierenden Mischung.

4. Verarbeitungsverfahren nach Anspruch 2 oder 3, wobei der Harnstoff und die Derivate davon mindestens einer, ausgewählt aus der Gruppe bestehend aus Harnstoff, Methylharnstoff, Ethylharnstoff, *n*-Propylharnstoff, Isopropylharnstoff, *n-*Butylharnstoff, Isobutylharnstoff und *n*-Pentylharnstoff, sind und in einer Menge von 0,0001 % bis 20 % eines Gewichts des Naturkautschuklatex hinzugefügt werden; und
die Protease mindestens eine, ausgewählt aus der Gruppe bestehend aus Alkaliprotease, 2079 Alkaliprotease, Trypsin, proteolytischem Enzym, Papain, Bromelain und Superase-Bakterienprotease, ist und in einer Menge von 0,0001 % bis 15 % des Gewichts des Naturkautschuklatex hinzugefügt wird.

5. Verarbeitungsverfahren nach Anspruch 3, wobei das polare organische Solvens mindestens eines, ausgewählt aus der Gruppe bestehend aus Methanol, Ethanol, Diethylether, Dioxan, Tetrahydrofuran, Ethylenoxid, Cyclohexan, Aceton, Dihydroxyaceton, Propanol, 2-Propanol, *n*-Butanol, Dimethylsulfoxid und Dimethylacetamid, ist und in einer Menge von 0,0001 % bis 30 % eines Gewichts des Naturkautschuklatex hinzugefügt wird.

6. Verarbeitungsverfahren nach einem der Ansprüche 1 bis 3, wobei der Naturkautschuklatex in den Schritten 1) und 2) einer, ausgewählt aus der Gruppe bestehend aus frischem Kautschuklatex von *Hevea brasiliensis* und konzentriertem Kautschuklatex/Skim-Latex davon, Kautschuklatex *Eucommia ulmoides* und konzentriertem Kautschuklatex/Skim-Latex davon, und Kautschuklatex *Parthenium argentatum* und konzentriertem Kautschuklatex/Skim-Latex davon, ist und der Naturkautschuklatex einen Massengehalt an trockenem Kautschuk von 0,5 % bis 70 % aufweist.

7. Verarbeitungsverfahren nach einem der Ansprüche 1 bis 3, wobei der pH-Regulator in den Schritten 1) und 3) mindestens eines, ausgewählt aus der Gruppe bestehend aus Monokaliumphosphat, Dikaliumphosphat, Mononatriumphosphat, Dinatriumphosphat, Natriumphosphat, Kaliumacetat, Natriumacetat, Schwefelsäure, Salzsäure, Salpetersäure, Essigsäure, Bernsteinsäure, Citronensäure, Natriumhydroxid, Ammoniakwasser, Kaliumhydroxid, Natriumcarbonat und Natriumhydrogencarbonat, ist und in einer Menge von 0,0001 % bis 10 % eines Gewichts des Naturkautschuklatex zum Einstellen eines pH-Werts auf 8 bis 11 hinzugefügt wird; und
das Tensid in den Schritten 1), 3) und 4) mindestens eines, ausgewählt aus der Gruppe bestehend aus einem nichtionischen Tensid, einem anionischen Tensid, einem kationischen Tensid und einem amphoteren Tensid, ist und in einer Menge von 0,0001 % bis 20 % des Gewichts des Naturkautschuklatex hinzugefügt wird.

8. Verarbeitungsverfahren nach Anspruch 7, wobei das nichtionische Tensid mindestens eines, ausgewählt aus der Gruppe bestehend aus einem Polyoxyalkylenestertensid, einem Polyolfettsäureestertensid, einem Polyoxyalkylenethertensid, einem Alkylpolyglucosidtensid und einem Zuckerfettsäureestertensid, ist;
das anionische Tensid mindestens eines, ausgewählt aus der Gruppe bestehend aus Diphenylethersulfonat, Alkylbenzolsulfonat, Alkylnaphthalinsulfonat, Naphthalinsulfonat, Alkylsulfonat, Dialkylsulfosuccinat, α-Olefinsulfonat, α-sulfoniertes Fettsäuresalz, Alkylsulfat, Polyoxyalkylenstilbenphenolsulfat, Polyoxyalkylensulfat, Tristyrolphenolsulfat, Polyoxyalkylenphenylethersulfat, Alkylsulfatestersalz, Polyoxyalkylenalkylsulfat, Polyoxyalkylenalkylphenylethersulfat, tristyrolisiertes Polyoxyalkylenphenolsulfat, distyrolisiertes Polyoxyalkylenphenolsulfat, Alkylphosphat, Polyoxyalkylenphosphat, Alkylphosphatsalz und Polyoxyalkylenphosphatsalz ist;
das kationische Tensid mindestens eines, ausgewählt aus der Gruppe bestehend aus Imidazoliniumsalz, Alkylaminsalz, einem Alkylaminderivat und einer quaternären Alkylaminammoniumverbindung, ist; und
das amphotere Tensid mindestens eines, ausgewählt aus der Gruppe bestehend aus einem Aminosäuretensid, einem Aminoxidtensid und einem Betaintensid, ist.

9. Verarbeitungsverfahren nach einem der Ansprüche 1 bis 3, wobei der Konservierungsstoff in den Schritten 2), 3) und 4) mindestens eines, ausgewählt aus der Gruppe bestehend aus Zinkoxid, Benzoesäure, Natriumbenzoat, Ammoniumnaphthenat, Polyhexamethylenguanidin und Polymerderivaten davon, Tetramethylthiuramdisulfid, Calciumpropionat, Natriumdiacetat, Methyl-*p-*hydroxybenzoat, Ethyl-*p*-hydroxybenzoat, Propyl-*p*-hydroxybenzoat, Butyl-*p-*hydroxybenzoat und Kaliumsorbat, ist und in einer Menge von 0,0001 % bis 20 % eines Gewichts des Naturkautschuklatex hinzugefügt wird; und
das Aufrahmungsmittel in den Schritten 2), 3) und 4) mindestens eines, ausgewählt aus der Gruppe bestehend aus einem natürlichen wasserlöslichen Polymer und modifizierten wasserlöslichen Polymeren davon, und einem synthetischen wasserlöslichen Polymer, ist und in einer Menge von 0,0001 % bis 40 % des Gewichts des Naturkautschuklatex hinzugefügt wird.

10. Verarbeitungsverfahren nach Anspruch 9, wobei das natürliche wasserlösliche Polymer und die modifizierten wasserlöslichen Polymere davon mindestens eines, ausgewählt aus der Gruppe bestehend aus Gummi arabicum, Leinsamengummi, Guargummi, Knochenleim, Carrageenan, Gelatine, Johannisbrotgummi, Pectin, Xanthangummi, Konjacgummi, Tanninextrakt, Carrageenan, Gummi *Abelmoschus manihot*, Gummi *bletilla hyacinthina*, Trehalose, Ammoniumalginat, Natriumalginat, Calciumalginat, Kaliumalginat, Propylenglycolalginat, Chitosan, Chitosanoligosaccharid, wasserlöslichem Chitosan, carboxyliertem Chitosan, Chitosansalz, Chitosansulfat, Hyaluronsäure-ähnlichem Chitosan, einem Copolymer aus Chitosan und Polyvinylpyrrolidon, Mucopolysaccharid, Hyaluronsäure, Carboxymethylcellulose, Hydroxyethylcellulose, Hydroxypropylcellulose, Methylcellulose, Ethylcellulose und Cellulosexanthat, ist; und das synthetische wasserlösliche Polymer mindestens eines, ausgewählt aus der Gruppe bestehend aus Polyethylenimin, Carbopolharz, Aluminiummagnesiumsilicat, Polyvinylalkohol, einem Polyvinylalkohol-Copolymer, Polyacrylamid, einem Polyacrylamid-Copolymer, Polyacrylsäure, Natriumpolyacrylat, Polyvinylpyrrolidon, einem Polyvinylpyrrolidon-Copolymer, Polyethylenglycol, einem quaternären Ammoniumsalzpolymer, Polyoxyethylen, Polyoxyethylenether, Polyoxypropylen und Polyglycerolglycidylether, ist.

11. Verarbeitungsverfahren nach einem der Ansprüche 1 bis 3, wobei das Rühren in den Schritten 1), 2), 3) und 4) für 20 min bis 48 h bei einer Temperatur von 5 °C bis 55 °C und einer Rührgeschwindigkeit von 30 U/min bis 600 U/min durchgeführt wird; und das Stehenlassen für 5 h bis 10 Tage durchgeführt wird.

12. Verarbeitungsverfahren nach einem der Ansprüche 1 bis 3, wobei die Phasentrennung in den Schritten 2), 3) und 4) durch eine Sichtprüfung, einen Transmissionskontrast oder eine Ultraschalldetektion identifiziert wird.

## Revendications

1. Procédé de traitement d'un latex de caoutchouc naturel par crémage, comprenant les étapes suivantes :
étape 1), ajout d'un agent tensioactif, d'un régulateur de pH, et d'eau désionisée dans le latex de caoutchouc naturel pour obtenir un premier mélange, et agitation énergique du premier mélange à une température commandée pour obtenir un système de latex ;
étape 2), ajout d'un conservateur et d'un agent de crémage dans le latex de caoutchouc naturel ou le système de latex obtenu à l'étape 1) pour obtenir un deuxième mélange, et agitation énergique du deuxième mélange ; mise au repos du deuxième mélange à une température commandée jusqu'à ce qu'une séparation de phase se produise ; et collecte de la phase supérieure de latex de caoutchouc et d'une phase inférieure de latex écrémé, respectivement ;
étape 3), dilution de la phase supérieure de latex de caoutchouc obtenue à l'étape 2) avec de l'eau désionisée ; ajout d'un conservateur, d'un régulateur de pH, d'un agent tensioactif et d'un agent de crémage pour obtenir un troisième mélange, et agitation énergique du troisième mélange ; mise au repos du troisième mélange à une température commandée jusqu'à ce qu'une séparation de phase se produise ; collecte d'une phase supérieure de latex de caoutchouc ; et répétition des étapes ci-dessus une pluralité de fois, dans lequel plus il y a de répétitions, plus le latex de caoutchouc obtenu est pur ; et
étape 4), soumission de l'une des phases inférieures de latex écrémé obtenues à l'étape 2) et à l'étape 3) ou d'une combinaison d'au moins deux des phases inférieures de latex écrémé obtenues à des moments différents à une concentration par centrifugation ou à une dilution avec de l'eau désionisée ; ajout d'un conservateur, d'un régulateur de pH, d'un agent tensioactif et d'un agent de crémage pour obtenir un quatrième mélange, et agitation énergique du quatrième mélange ; mise au repos du quatrième mélange à une température commandée jusqu'à ce qu'une séparation de phase se produise ; collecte d'une phase supérieure de latex de caoutchouc ; et répétition des étapes ci-dessus une pluralité de fois, dans lequel plus il y a de répétitions, plus le latex de caoutchouc obtenu est pur.

2. Procédé de traitement selon la revendication 1, comprenant en outre à l'étape 2), l'ajout d'urée et dérivés de celle-ci ou d'une protéase avant l'ajout d'un conservateur et d'un agent de crémage au latex de caoutchouc naturel ou au système de latex obtenu à l'étape 1) et l'agitation.

3. Procédé de traitement selon la revendication 2, comprenant en outre l'ajout d'un solvant organique polaire tout en ajoutant l'urée et les dérivés de celle-ci ou la protéase, puis l'agitation énergique d'un mélange résultant.

4. Procédé de traitement selon la revendication 2 ou 3, dans lequel l'urée et les dérivés de celle-ci sont au moins l'une choisie dans le groupe constitué d'urée, méthyl-urée, éthyl-urée, n-propyl-urée, isopropyl-urée, n-butyl-urée, isobutyl-urée, et n-pentyl-urée, et sont ajoutés en une quantité de 0,0001 % à 20 % d'un poids du latex de caoutchouc naturel ; et
la protéase est au moins l'une choisie dans le groupe constitué de protéase alcaline, protéase alcaline 2079, trypsine, enzyme protéolytique, papaïne, bromélaïne, et protéase bactérienne superase, et est ajoutée en une quantité de 0,0001 % à 15 % du poids du latex de caoutchouc naturel.

5. Procédé de traitement selon la revendication 3, dans lequel le solvant organique polaire est au moins l'un choisi dans le groupe constitué de méthanol, éthanol, éther diéthylique, dioxane, tétrahydrofurane, oxyde d'éthylène, cyclohexane, acétone, dihydroxyacétone, propanol, 2-propanol, n-butanol, sulfoxyde de diméthyle, et diméthylacétamide, et est ajouté en une quantité de 0,0001 % à 30 % d'un poids du latex de caoutchouc naturel.

6. Procédé de traitement selon l'une quelconque des revendications 1 à 3, dans lequel le latex de caoutchouc naturel aux étapes 1) et 2) est l'un choisi dans le groupe constitué de latex de caoutchouc frais provenant d'*Hevea brasiliensis* et latex de caoutchouc concentré/latex écrémé de celui-ci, latex de caoutchouc d'*Eucommia ulmoides* et latex de caoutchouc concentré/latex écrémé de celui-ci, et latex de caoutchouc de *Parthenium argentatum* et latex de caoutchouc concentré/latex écrémé de celui-ci, et le latex de caoutchouc naturel a une teneur en masse de caoutchouc sec de 0,5 % à 70 %.

7. Procédé de traitement selon l'une quelconque des revendications 1 à 3, dans lequel le régulateur de pH aux étapes 1) et 3) est au moins l'un choisi dans le groupe constitué de phosphate monopotassique, phosphate dipotassique, phosphate monosodique, phosphate disodique, phosphate de sodium, acétate de potassium, acétate de sodium, acide sulfurique, acide chlorhydrique, acide nitrique, acide acétique, acide succinique, acide citrique, hydroxyde de sodium, ammoniac eau, hydroxyde de potassium, carbonate de sodium et bicarbonate de sodium, et est ajouté en une quantité de 0,0001 % à 10 % d'un poids du latex de caoutchouc naturel pour ajuster une valeur de pH de 8 à 11 ; et
l'agent tensioactif aux étapes 1), 3) et 4) est au moins l'un choisi dans le groupe constitué d'un agent tensioactif non ionique, d'un agent tensioactif anionique, d'un agent tensioactif cationique et d'un agent tensioactif amphotère, et est ajouté en une quantité de 0,0001 % à 20 % du poids du latex de caoutchouc naturel.

8. Procédé de traitement selon la revendication 7, dans lequel l'agent tensioactif non ionique est au moins l'un choisi dans le groupe constitué d'un agent tensioactif ester de polyoxyalkylène, d'un agent tensioactif ester d'acide gras de polyol, d'un agent tensioactif éther de polyoxyalkylène, d'un agent tensioactif alkyl polyglucoside et d'un agent tensioactif ester d'acide gras de sucre ;
l'agent tensioactif anionique est au moins l'un choisi dans le groupe constitué de sulfonate d'éther diphénylique, sulfonate d'alkylbenzène, naphtalène-sulfonate d'alkyle, naphtalène-sulfonate, sulfonate d'alkyle, sulfosuccinate de dialkyle, α-oléfinesulfonate, sel d'acide gras α-sulfoné, sulfate d'alkyle, sulfate de polyoxyalkylène stilbène phénol, sulfate de polyoxyalkylène, sulfate de tristyrene phénol, sulfate de polyoxyalkylène phényl éther sulfate, sel d'ester alkylsulfate, alkylsulfate polyoxyalkylène, polyoxyalkylène alkyl phényl éther sulfate, sulfate de polyoxyalkylène phénol tristyréné, sulfate de polyoxyalkylène phénol distyréné, phosphate d'alkyle, phosphate de polyoxyalkylène, sel phosphate d'alkyle et sel phosphate de polyoxyalkylène ;
l'agent tensioactif cationique est au moins l'un choisi dans le groupe constitué de sel d'imidazolinium, sel d'alkylamine, un dérivé d'alkylamine, et un composé d'ammonium quaternaire d'alkylamine ; et
l'agent tensioactif amphotère est au moins l'un choisi dans le groupe constitué d'un agent tensioactif acide aminé, d'un agent tensioactif oxyde d'amine, et d'un agent tensioactif de bétaïne.

9. Procédé de traitement selon l'une quelconque des revendications 1 à 3, dans lequel le conservateur aux étapes 2), 3) et 4) est au moins l'un choisi dans le groupe constitué d'oxyde de zinc, acide benzoïque, benzoate de sodium, naphténate d'ammonium, polyhexaméthylèneguanidine et dérivés polymères de celui-ci, disulfure de tétraméthylthiurame, propionate de calcium, diacétate de sodium, *p*-hydroxybenzoate de méthyle, *p*-hydroxybenzoate d'éthyle, *p-*hydroxybenzoate de propyle, *p*-hydroxybenzoate de butyle, et sorbate de potassium, et est ajouté en une quantité de 0,0001 % à 20 % d'un poids du latex de caoutchouc naturel ; et
l'agent de crémage aux étapes 2), 3) et 4) est au moins l'un choisi dans le groupe constitué d'un polymère hydrosoluble naturel et de polymères hydrosolubles modifiés de celui-ci, et d'un polymère hydrosoluble synthétique, et est ajouté en une quantité de 0,0001 % à 40 % du poids du latex de caoutchouc naturel.

10. Procédé de traitement selon la revendication 9, dans lequel le polymère hydrosoluble naturel et les polymères hydrosolubles modifiés de celui-ci sont au moins l'un choisi dans le groupe constitué de gomme arabique, gomme de lin, gomme de guar, colle d'os, carraghénane, gélatine, gomme de caroube, pectine, gomme xanthane, gomme konjac, extrait de tanin, carraghénane, gomme d'*Abelmoschus manihot*, gomme de *bletilla hyacinthina*, tréhalose, alginate d'ammonium, alginate de sodium, alginate de calcium, alginate de potassium, alginate de propylène glycol, chitosane, oligosaccharide de chitosane, chitosane hydrosoluble, chitosane carboxylé, sel de chitosane, sulfate de chitosane, chitosane de type acide hyaluronique, copolymère de chitosane et de polyvinylpyrrolidone, mucopolysaccharide, acide hyaluronique, carboxyméthylcellulose, hydroxyéthylcellulose, hydroxypropylcellulose, méthylcellulose, éthylcellulose et xanthate de cellulose ; et le polymère hydrosoluble synthétique est au moins l'un choisi dans le groupe constitué de polyéthylène-imine, résine carbopol, silicate d'aluminium et de magnésium, alcool polyvinylique, copolymère d'alcool polyvinylique, polyacrylamide, un copolymère de polyacrylamide, acide polyacrylique, polyacrylate de sodium, polyvinylpyrrolidone, un copolymère de polyvinylpyrrolidone, polyéthylèneglycol, un polymère de sel d'ammonium quaternaire, polyoxyéthylène, éther de polyoxyéthylène, polyoxypropylène et éther glycidylique de polyglycérol.

11. Procédé de traitement selon l'une quelconque des revendications 1 à 3, dans lequel l'agitation aux étapes 1), 2), 3) et 4) est effectuée pendant 20 min à 48 h à une température de 5 °C à 55 °C et à une vitesse d'agitation de 30 tr/min à 600 tr/min ; et la mise au repos est effectuée pendant 5 h à 10 jours.

12. Procédé de traitement selon l'une quelconque des revendications 1 à 3, dans lequel la séparation de phase aux étapes 2), 3) et 4) est identifiée par une inspection visuelle, un contraste de transmittance, ou une détection par ultrasons.
